# EUROPÄISCHE PATENTANMELDUNG

(11) **EP 0 860 493 A1**
(43) Veröffentlichungstag der Anmeldung: **26.08.1998**
(21) Anmeldenummer: 97121863.1
(22) Anmeldetag: 11.12.1997
(51) Int. Cl.: C09K 17/06, E01C 7/36

(54) **Verfahren und Bindemittel zur Verbesserung und/oder Verfestigung von Böden**

(30) Priorität: 19.02.1997 DE 19706498
(71) Anmelder: Portlandzementwerk Dotternhausen Rudolf Rohrbach KG, 72359 Dotternhausen (DE)
(72) Erfinder: Rohrbach, Gerhard, 72359 Dotternhausen (DE); Fischer, Christoph, 72401 Haigerloch (DE)
(74) Vertreter: Körber, Wolfhart, Dr. rer.nat.

(57) **Zusammenfassung**

Die Erfindung betrifft ein Verfahren und ein Bindemittel zur Verbesserung und/oder Verfestigung von fein- und gemischtkörnigen Böden, wobei in den Boden ein Bindemittel eingearbeitet wird, das eine Mischung einer hydraulischen und einer nicht hydraulischen Komponente darstellt. Der Anteil der hydraulischen Komponente beträgt im allgemeinen 50 bis 90 Gew.-% und der Anteil der nicht hydraulischen Komponente 10 bis 50 Gew.-% der Mischung.

## Beschreibung

Die Erfindung betrifft ein Verfahren und ein Bindemittel zur Verbesserung und/oder Verfestigung von fein- und gemischtkörnigen Böden, die den Untergrund für Straßen, Plätze, Flughäfen, Schienenstrecken oder dergleichen bilden oder für Dammschüttungen verwendet werden, wobei in den Boden Bindemittel eingearbeitet werden.

Gemäß DIN 18196 werden Böden nach Korngrößenanteilen klassifiziert. Bei feinkörnigen Böden beträgt der Kornanteil < 0,06 mm Durchmesser mehr als 40 Gew.-%, bei gemischtkörnigen Böden liegt der Kornanteil < 0,06 mm Durchmesser zwischen 5 und 40 Gew.-%. Beim Bau von Straßen, Start- und Landebahnen, Schienenstrecken oder dergleichen ist darauf zu achten, daß z.B. der unter dem Straßenkörper liegende Boden die Belastung, die aus dem Gewicht des Fahrbahnkörpers, aus dem Verkehr und aus wechselnden Witterungsbedingungen herrühren, ohne unzulässige Verformungen aufnehmen kann. Bei fein- und gemischtkörnigen Böden hängt diese aufnehmbare Belastung bekanntermaßen vom anstehenden Wassergehalt des betreffenden Bodens ab.

Bei der überwiegenden Anzahl der Böden liegt der anstehende Wassergehalt über dem für den Straßenbau oder dergleichen erforderlichen optimalen Wassergehalt für den jeweiligen Boden, so daß der Boden, wenn er mit diesem anstehenden Wassergehalt verwendet werden würde, die oben genannten Belastungen nur durch Verdrückungen aufnehmen könnte, die den darüberliegenden Straßenbelag zerstören würden.

Um dies zu verhindern, wurde in der Vergangenheit den Böden Weißfeinkalk zugemischt und dadurch der Wassergehalt so weit reduziert und gleichzeitig der Boden umstrukturiert, so daß er verdichtet werden konnte. Wenn nach der Behandlung mit Weißfeinkalk der geforderte Verformungsmodul (i.d.R.: E_{V2} = 45 MN/m²) nicht erreicht wurde, mußte dem behandelten Boden in einem zweiten Arbeitsschritt Zement untergemischt werden, worauf dieser dann wieder verdichtet werden mußte.

Mit diesen beiden Maßnahmen war es bis dahin möglich, den Boden (in begrenztem Umfang) zu verdichten und ihm Tragfähigkeit zu verleihen.

Aufgabe der vorliegenden Erfindung ist es, die Verbesserung und/oder Verfestigung von Böden mit weniger Arbeitsschritten zu erreichen und gleichzeitig die Tragfähigkeit der Böden zu erhöhen. Gleichzeitig sollten die oben angegebenen Merkmale mit einer Einsparung an eingesetztem Bindemittel einhergehen.

Die vorstehende Aufgabe wird gelöst durch ein Verfahren zur Verbesserung und/oder Verfestigung von Untergrund für Straßen oder dergleichen bildenden fein- und gemischtkörnigen Böden, wobei in den Boden ein Bindemittel eingearbeitet wird. Das erfindungsgemäße Verfahren ist dadurch gekennzeichnet, daß ein Bindemittel eingesetzt wird, das eine Mischung aus einer hydraulischen und einer nicht hydraulischen Komponente enthält.

Als erfindungsgemäß einzusetzende hydraulische Komponenten können genannt werden: gebrannter Ölschiefer, Zement, hochhydraulischer Kalk, Hüttensand, Flugaschen, wie beispielsweise Steinkohlenflugaschen und Puzzolane, wie beispielsweise Vulkanaschen. Bevorzugt sind gebrannter Ölschiefer nach DIN 1164 und Zement nach DIN 1164.

Als nicht hydraulische Komponente können verwendet werden: Kalk, vorzugsweise Weißfeinkalk.

Die hydraulische Komponente ist im allgemeinen in Mengen von 50 bis 90 Gew.-% bezogen auf das Gesamtgewicht des eingesetzten Bindemittels enthalten. Bevorzugt sind Mengen im Bereich von 50 bis 70 Gew.-%.

Der Anteil der nicht hydraulischen Komponente beträgt zwischen 10 und 50 Gew.-%, bezogen auf das Gesamtgewicht des Bindemittels, wobei Mengen im Bereich von 30 bis 45 Gew.-% bevorzugt sind.

Die hydraulische bzw. nicht hydraulische Komponente können jeweils einzeln mit der jeweilig anderen Komponente verwendet werden, oder eine Kombination von hydraulischen bzw. nicht hydraulischen Komponenten können mit der anderen Komponente oder einer Kombination der anderen Komponente verwendet werden.

Erfindungsgemäß können die Maßnahmen zur Verbesserung bzw. Verfestigung der Böden nun in einem Arbeitsschritt durchgeführt werden. Jede Bindemittelkomponente für sich allein genommen, vermag jeweils nur einen der oben beschriebenen Effekte zu bewerkstelligen. Weißfeinkalk reduziert schnell den Wassergehalt und strukturiert den Boden um, erhöht danach aber die Tragfähigkeit des Bodens nur in sehr langen Zeiträumen (Jahren), da es zur Carbonatisierung Kohlendioxidnachschub aus der Luft benötigt. Hydraulische Bindemittel bewirken dagegen eine deutliche Steigerung der Tragfähigkeit innerhalb von wenigen Tagen. Trotz Kombinierung der jeweiligen Ausgangsstoffe in einem Produkt hat sich gezeigt, daß die jeweiligen Auswirkungen auf den Boden nicht verschlechtert werden, sondern die beiden Stoffe vielmehr synergistisch zusammenarbeiten und zur Verfestigung der Böden beitragen.

Das Bindemittel wird mit speziellen Bodenfräsen intensiv und gleichmäßig in den Boden eingemischt (falls nötig mehrere Fräsübergänge) und anschließend mit geeigneten Verdichtungsgeräten (Glattrad- oder Schaffußwalze) auf die erforderliche Proctordichte verdichtet.

Bei feinkörnigen Böden, wie beispielsweise der Bodengruppe der ausgeprägt plastischen Tone (TA), kann gemäß den Verfahren des Standes der Technik, selbst wem die Böden mit dem optimalen Wassergehalt zur Verdichtung in der Natur vorkommen, keine ausreichende Tragfähigkeit erreicht werden. Hier bewirkt übertaschenderweise das Bindemittel erfindungsgemäß eine Umstrukturierung und zudem eine Tragfähigkeitserhöhung des Bodens. Die Behandlung dieser Böden mit Weißfeinkalk allein reduziert in solchen Fällen den Wassergehalt zu stark und benötigt für eine Tragfähigkeitssteigerung zu viel Zeit. Eine Behandlung mit lediglich hydraulischem Bindemittel benötigt für die erforderliche Umstrukturierung des Bodens eine zu hohe Dosierung. Auch bei dieser Bodengruppe ist erfindungsgemäß das obige Bindemittel am geeignetsten.

Die jeweilige Bindemittelsorte und die für den Anwendungsfall optimale Dosierung (in der Regel 1,5 - 6 M.-Gew.-% bezogen auf das Trockengewicht des zu verbessernden Bodens) müssen für jeden Boden vorab in einer Eignungsprüfung an einem unabhängigen Institut geklärt werden. In einer Eignungsprüfung wird nach Feststellen des Wassergehaltes, der Korngrößenverteilung, der Konsistenzgrenzen und der Glühverluste ein Proctorversuch DIN 1836 und ein CBR-Versuch durchgeführt. Der Proctorversuch legt die optimale Bindemittelmengen für die notwendige Verdichtung fest, der CBR-Versuch simuliert im Labor den Plattendruckversuch im Feld, um in der Eignungsprüfung die Steigerung der Tragfähigkeit zu ermitteln. Anstelle des CBR-Versuches können auch einaxiale Druckversuche angestellt werden. Das durchführende Institut benötigt in beiden Fällen Erfahrungswerte, um von CBR-Werten auf Plattendruckwerte oder von einaxialen Druckfestigkeiten auf Plattendruckwerte Rückschlüsse ziehen zu können.

Neben der erforderlichen Bindemittelmenge legt die Eignungsprüfung auch die ideale Bindemittelzusammensetzung fest. Eine Mischanlage für solche Bindemittel muß die gewählte Sorte mit einer Genauigkeit von höchstens 1% Abweichung produzieren und die Zusammensetzung dokumentieren können.

Erfindungsgemäß ermöglicht das Bindemittel die Behandlung der o.g. Böden, die mit den beiden Bindemittelkomponenten allein nur in wesentlich höherer Dosierung oder mit einem geringeren Nutzen möglich wären. Weiter ermöglicht erfindungsgemäß das obige Bindemittel die wirtschaftliche Einarbeitung des Bindemittels, weil mit üblichen Baustelleneinrichtungen wie bisher auch, diese Arbeiten vorgenommen werden können. Wenn Weißfeinkalk und Zement eingesetzt werden sollen, rationalisiert das obige Bindemittel überraschenderweise den Arbeitsablauf auf die Hälfte und sorgt so für eine bedeutende Zeitersparnis.

Da der anstehende Mischboden in der Regel mit dem Bindemittel behandelt werden kann, schont dieses Verfahren die Ressourcen und auf der anderen Seite das Deponievolumen.

### Beispiele

### Beispiel 1

Einem feinkörnigen Boden mit einem in der Natur anstehenden Wassergehalt von 25% (zu naß, optimaler Wassergehalt 21,8%) wurde im Labor 1, 2 und 3% eines erfindungsgemäßen Bindemittels untergemischt, das die folgende Zusammensetzung aufwies:
Hydraulische Komponente: 50% gebrannter Ölschiefer
Nicht hydraulische Komponente: 50% CaO

Nach drei Tagen wurde ein Belastungstest (CBR-Versuch nach technischer Prüfvorschrift für Boden und Fels im Straßenbau, Teil B 7.1 der Forschungsgesellschaft für das Straßen-wesen) durchgeführt. Im Gegensatz zu dem unbehandelten Boden, der eine ungenügende Tragfähigkeit aufwies, wurde die Tragfähigkeit mit 1% des erfindungsgemäßen Bindemittels um das 4-fache, mit 2% um das 5-fache und mit 3% um das 9-fache gesteigert. Bei ausgeführtem Praxisversuch konnte die Tragfähigkeit gegenüber dem Boden ohne Bindemittel auf das 3- bis 4-fache gesteigert werden.

### Beispiel 2

### (Schluff, tonig, schwach, sandig)

Wassergehalt in der Natur 29,1%. Optimaler Wassergehalt 19,2%. Um hier einen Verdichtungsgrad > 97% zu erreichen, mußte von einem rein hydraulischen Bindemittel die doppelte Dosierung angewandt werden als mit einem erfindungsgemäßen Bindemittel, das folgende Zusammensetzung aufwies:
Hydraulische Komponente: 60% gebrannter Ölschiefer
Nichthydraulische Komponente: 40% CaO

DOROSOL erhöhte die Tragfähigkeit auf den 9-fachen Wert gegenüber dem Boden ohne Bindemittel.
CBR-Wert ohne Bindemittel = 3,6%;
CBR-Wert mit 4% DOROSOL C 40 = 32%.

## Patentansprüche

1. Verfahren zur Verbesserung und/oder Verfestigung von Untergrund für Straßen oder dergleichen bildenden fein- und gemischtkörnigen Böden, wobei in den Boden ein Bindemittel eingearbeitet wird, dadurch gekennzeichnet, daß ein eine Mischung einer hydraulischen und einer nicht hydraulischen Komponente enthaltendes Bindemittel verwendet wird.

2. Verfahren nach Anspruch 1, dadurch gekennzeichnet, daß als hydraulische Komponente gebrannter Ölschiefer verwendet wird.

3. Verfahren nach Anspruch 1, dadurch gekennzeichnet, daß als hydraulische Komponente Zement verwendet wird.

4. Verfahren nach einem der Ansprüche 1 bis 3, dadurch gekennzeichnet, daß als nicht hydraulische Komponente Kalk verwendet wird.

5. Verfahren nach Anspruch 4, dadurch gekennzeichnet, daß die hydraulische Komponente Weißfeinkalk ist.

6. Bindemittel zur Durchführung des Verfahrens nach einem der Ansprüche 1 bis 4, dadurch gekennzeichnet, daß der Anteil der hydraulischen Komponenten 50 bis 90 Gew.-% und der Anteil der nicht hydraulischen Komponenten 10 bis 50 Gew.-% der Mischung beträgt.

7. Bindemittel nach Anspruch 6, dadurch gekennzeichnet, daß der Anteil der hydraulischen Komponenten 10 bis 45 Gew.-% und der Anteil der nicht hydraulischen Komponenten 55 bis 90 Gew.-% der Mischung beträgt.
